# EUROPEAN PATENT APPLICATION

(11) **EP 3 038 298 A1**
(43) Date of publication of application: **29.06.2016**
(21) Application number: 14382567.7
(22) Date of filing: 23.12.2014
(51) Int. Cl.: H04L 12/58, G06F 21/31, G06F 21/62, H04L 9/00, H04L 29/06, H04W 4/12, H04W 12/02, H04W 12/06, H04W 12/08

(54) **A computer-implemented method for protecting classified content on a computing device and computer programs thereof**

(71) Applicant: Telefonica Digital España, S.L.U., 28013 Madrid (ES)
(72) Inventor: Neystadt, John Eugene, 44471 Kfar-Saba (IL); Martin, Pielot, 28013 Madrid (ES); Dingler, Tilman, 28013 Madrid (ES); Grunenberger, Yan, 28013 Madrid (ES)
(74) Representative: Carlos Hernando, Borja

(57) **Abstract**

A computer implemented method and computer programs for protecting classified content on a computing device,
the method comprising: providing, by a user (A) to an application (AD) installed on said computing device (100A), content to be marked as classified content; providing, by the user (A) to the application (AD), information which authenticates him/her in the application (AD), the latter verifying that said information is authentic, and upon a correct authentication of the user (A) marking the content as classified content; and continuously validating, by the application (AD), every a certain period of time, that the user (A) continues to provide said information and that said information provided by the user (A) is authentic; wherein upon the first user (A) failing to provide a correct information, the application (AD) preventing revealing the classified content, and upon the user (A) providing a correct information the application (AD) allowing displaying the classified content.

## Description

### Field of the invention

The present invention generally relates to authentication and securing in a computing system. In particular, the invention relates to a computer implemented method and computer programs products for protecting classified content on a computing device.

### Background of the invention

Many computing devices, such as mobile phones, tablets, or personal computers, are designed to be personal, yet they are sometimes shared. The same device can be used to exchange sensitive messages as well as showing pictures/videos to friends and family. However, not all content is meant for everyone. Content reflecting on those activities in which the content is not meant for everyone may be considered as classified/sensitive.

To protect a classified content, device can be secured, e.g. with passwords, codes, or gestures. However, once access is granted, all content is available at once. And often, classified content is tightly intertwined with non-classified content. Allowing people access to one's personal devices requires trust or having a constant eye that they won't access classified content. Thus, it has become increasingly hard for users to protect their classified content without completely restricting access to one's personal devices.

Further, restricting access requires explicitly logging out or letting a timeout period pass without interacting with the device. Consequently, the process of hiding classified content is easily notable to external people, which may in the first place raise suspicions about the existence of classified content.

The authentication methods commonly found in today's computing devices are: password (and sometimes usernames); passcodes, as e.g. in mobile phones; gestures, e.g. as in Android® phones; and fingerprint, e.g. as introduced with the iPhone® phones.

Patent Application WO-A1-2014008399 describes a Continuous multi-factor authentication, which combines authentication credentials, such as username and password with images received from a camera. The camera can detect unauthorized objects on the viewing area and thus trigger an associated display from presenting content.

Patent US-B2-8660322 proposes a passive continuous authentication method wherein a camera-based system derives biometric features from the user's face and the histogram of the clothes. When the user leaves the terminal the screen locks up. Successful authentication unlocks the screen upon user return.

Patent application US-A1-20020095586 describes a technique for continuous user authentication where biometric features are continuously read from a biometric sensor during security-sensitive operations.

Patent application EP-A1-2597585 proposes a combining navigation and fingerprint sensing method. A touch sensitive input device captures fingerprint data and, if the captured data does not match the stored fingerprint data, it prevents access to at least a portion of the electronic device.

Patent US-B2-8305188 describes a system and method for logging in multiple users to a consumer electronics device by detecting gestures with a sensory device. The invention comprises monitoring an authenticated user with a camera and defining gestures that allows authenticated users to quickly log out of the system.

Apart from that, ephemeral messaging is another approach designed with the goal of protecting sensitive content. By the time of writing this patent application, Snapchat® is the most popular instance of ephemeral messaging services. Once the message is opened for the first time, it can only be viewed for limited time before it disappears permanently from servers and the user's device. Other services (such as SilentCircle® or TextCircle® from Open WhisperSystems) have been launched in regards to bring privacy-preserving message exchanges, using the same principle of ephemeral messengers, but coupled with strong cryptographic concepts, such as Perfect Forward Secrecy, in order to protect the messages from network interception, as well as guaranteeing that the messages is transferred following end-to-end principles without having the network storing the message on behalf of the user.

Continuous authentication proposed in the past follows an all-or-nothing approach: access to the whole content will only be granted when authentication is active. This does not solve the problem of the social awkwardness that arises when denying peers access to certain devices/applications.

In many of the cases, the authentication setup and the process are visible to outsiders, i.e. accessing classified content is visible to outsiders, and they can observe when the user interrupts accessing this content. This means that outsiders can suspect the existence of classified content, which can make it difficult to deny its existence (lack of plausible deniability).

While ephemerality introduced to delete and therefore protect content by default, this may not always be desired. Sometimes, users may want to repeatedly revisit classified content; however, ephemeral content may have expired by the time the user wishes to access it again. In addition, the use of a dedicated ephemeral messenger may already spark suspicion towards the existence of classified content.

Finally, the use of certain authentication methods, such as the camera-based system described in patent US-B2-8660322, or the use of certain application, such as ephemeral messengers, can make others aware that the user has protected classified content, which would not have been obvious in the first place.

### Description of the Invention

Embodiments of the present invention address these and/or other needs by providing a computer-implemented method for protecting classified content on a computing device. According to the method, a first user provides, to a first communication application installed on said computing device, content to be marked as classified content by said first communication application and information which authenticates him/her in the first communication application. The latter, then verifies that said information is authentic, and upon a correct authentication of the first user it marks the provided content as classified content.

Characteristically, the first communication application continuously validates, every a first configured certain period of time, that the first user continues to provide the information that authenticates him/her in the first communication application and that the provided information is authentic. Consequently, the first communication application, upon the first user failing to provide the correct information, prevents revealing the classified content on the first user computing device, whereas upon the first user provides the correct information, it displays the classified content on the first user computing device.

According to the invention, the content to be marked as classified content may comprise any of a message, a document, a picture, a video, an audio file, a user contact and the content exchanged/shared between them, an application, an email, etc.

According to an embodiment, for the particular case where the content provided by the first user is a user contact, the first communication application, in addition to the marking of the content as classified content, also marks any communications logs performed between the first user and said user contact which may include any of a message, an email, a call, a video call, and/or content exchanged between the first user and said user contact including a document, a picture, a video and/or an audio file, etc.

Moreover, the classified content may also be shared by the first user with other users, preferably through a message service. According to an embodiment, the classified content, once received by the others users (which also have a computing device with the communication application installed therein) will be automatically marked as classified content in the computing devices of the other users.

The content provided by the first user, besides being marked as classified content may also be encrypted by the first communication application (marked as classified and encrypted content). In these particular cases, the encryption can be done at least by means of two different alternatives. In the first alternative, the first communication application may retrieve an encryption key identifying the first user from a key chain of the first user computing device. In the second alternative, the first communication application may retrieve, from a public key repository which preferably is integrated into the message service but could also be an independent unit of the latter, a public encryption key corresponding to a pair of public/private encryption keys identifying the other user(s) with which the marked as classified and encrypted content will be shared.

According to an embodiment, the first user, via the first communication application, sends, through a message service, the marked as classified and encrypted content to a second user using a computing device with a second communication application installed therein, in this case, the classified content being encrypted by the first communication application using the public encryption key of said pair of public/private encryption keys identifying the second user. After the second user having received the marked as classified and encrypted content, (s)he provides to the second communication application information which authenticates him/her in the second communication application. The second communication application then validates that the information provided by the second user is authentic, and upon a correct authentication of the second user, the second communication application retrieves the private encryption key of said pair of public/private encryption keys identifying the second user from a key chain of the second user computing device. Finally, the second communication application decrypts the marked as classified and encrypted content using the retrieved private encryption key and displays on a display of the second user computing device the classified content only if the second user is still authenticated in the second communication application, the latter continuously performing, every a second configured certain period of time, said validation step.

According to the embodiments in which the classified content or marked as classified and encrypted content is shared, the message service may also send a notification alerting about the arrival of the classified content or marked as classified and encrypted content to the second communication application. However, according to an embodiment, the notification may be sent only if the second user is still authenticated in the second communication application. Alternatively, according to another embodiment, if the second user is no longer authenticated in the second communication application, the notification only notifies the second communication application of said arrival but without revealing the classified content or marked as classified and encrypted content.

The information provided by the first user may comprise biometric information of the first user including any of a fingerprint, an eye scan, a hand or palm geometry, a facial recognition and/or voice recognition. In this case, the first configured certain period of time may comprise a period of time between 1 to 5 seconds. Preferably of 1 second. Alternatively, the information provided by the first user may comprise any of a password, a personal identification number, a security token, or the swipe of a figure. In this last case, the first configured certain period of time may be of longer duration, e.g. between 20 to 45 seconds.

The first communication application may permanently store the classified content or marked as classified and encrypted content. Alternatively, the first communication application may remove the classified content or marked as classified and encrypted content once the latter having been displayed a configured number of times on the first user computing device. Even, the first communication application may prevent revealing the classified content or marked as classified and encrypted content on the first user computing device during a specified period of time.

Other embodiments of the invention include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present invention, with the continuous authentication allows for a design where simple, fast, and subtle changes in behavior are sufficient to break the authentication. Thus, users can switch to non-authenticated mode without others noticing (implicit log out).

In addition, present invention allow a user to always maintain content, such as a chat history, that looks "innocent", and plausibility deny the existence of any classified content. Moreover, with present invention, by using biometric authentication, sender and receiver can be certain that the intended receiver is the only one who can reveal classified content. Thus, the sender does not have to worry whether another unauthorized third party reads/accesses the content.

### Brief Description of the Drawings

The previous and other advantages and features will be more fully understood from the following detailed description of embodiments, with reference to the attached drawings, which must be considered in an illustrative and non-limiting manner, in which:
Fig. 1 is a flow diagram illustrating a method for protecting classified content on a computing device (and also for sharing the classified content, either encrypted or unencrypted) according to different embodiments of the present invention.
Fig 2 illustrates an example of a preferred embodiment of the present invention.

### Detailed Description of the Invention

Present invention provides a method for protecting classified content on a computing device. The content to be marked as classified/sensitive may include messages, pictures, videos, contacts and the content sent/shared by them, whole chat histories, applications, subjects, functions, among any other possibilities.

By default, the classified content becomes invisible and will not be visible during 'normal authentication phases'. The classified content will be rendered invisible in a way that it does not leave 'empty' spaces, i.e. it will not be apparent that content is missing. Only when launching and maintaining additional continuous authentication, the classified content will reappear and become visible on the computing device.

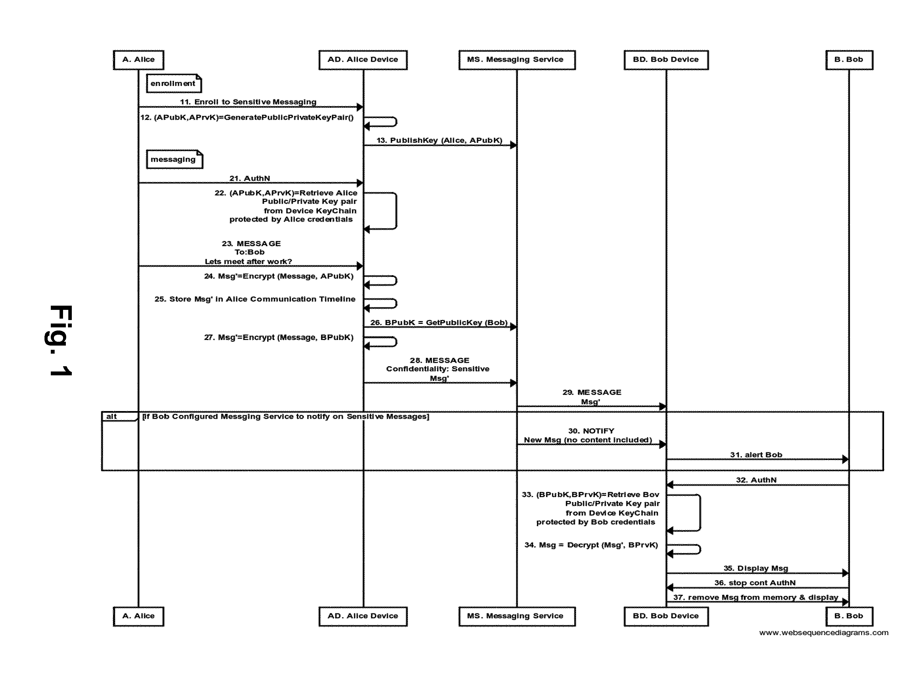

According to Fig 1, a configuration phase is performed prior to the creation, and exchanging, of classified content between a first user A (also termed Alice in the figure) and a second user B (also termed Bob in the figure), when the users are enrolling to sensitive service (11). During this phase, each of the first or second communication applications AD, BD are generating (12) symmetric encryption keys (for own usage) and optionally public/private key pairs for the embodiments when they want to exchange/share classified content. The public key, if generated, is published (13) to a messaging service MS, or other key exchange directory, via a protocol such as LDAP.

In addition the first user A and the second user B can optionally configure messaging service MS, whether it should alert the users upon newly received classified content.

When the first user A wants to store a classified content (e.g. a document or an image) on his/her computing device 100A having installed therein the first communication software application AD, (s)he provides the content to be marked as classified content to the first communication application AD and performs authentication (21) on his/her computing device 100A. Authentication can be done by means of any of the following methods: by entering a password; by entering a pin code; by swiping a figure; by using a biometric authentication, such as fingerprinting, voice recognition or face recognition, among others. Once first user A has been authenticated, the first communication application AD marks the content as classified content.

To reveal a classified content on the first user computing device 100A the first communication application AD performs continuous authentication which requires continuously validating that first user A is still authenticated. This is done by the first user A repeating the authentication process over a first configurable interval of time. For passive authentication methods, such as face or finger recognition, it could be as frequent as every 1 second (not limitative, as it could be a little more, up to 5 seconds), for other types that require action from first user A it could be over longer configurable time intervals, such as 30 seconds. Hence, upon the first user A fails to provide a correct authentication, the first communication application AD prevents revealing the classified content on the first user computing device 100A, and upon the first user A provides a correct authentication the first communication application AD allows displaying the classified content on the first user computing device 100A.

Besides that, according to an embodiment, the first communication application AD may also encrypt the marked classified content. In this case, when the first user A is authenticated, the first communication application AD extracts (22) encryption keys from device 100A key chain, protected by authentication credentials (it means that non-authenticated users cryptographically cannot obtain these keys).

The classified content, either encrypted or unencrypted, then can be stored (25) temporary or permanently on the first communication application AD.

According to another embodiment, if the first user A wants to share the classified content with another user (a second user B) using a computing device having also the communication application software installed therein (in this case referred as second communication application BD), (s)he sends, via the first communication application AD, the classified content to the second user B preferably through a message service MS. The classified content, according to an alternative, will be automatically marked as classified content in the second user computing device.

In addition, the classified content may be shared either encrypted or unencrypted. If first user A wants the classified content be sent encrypted, first communication application needs to encrypt the classified content in a way the second user B will be able to decrypt it. This can be achieved using Public/Private Key cryptography, so the first communication application AD retrieves (26) second user's B public key, preferably (as illustrated in Fig.1) from messaging service MS which has integrated therein a public key repository, or alternatively (not illustrated) from other independent public key directory or repository, and encrypt (27) the classified content with that public key. The sending (28) of the classified content, encrypted or unencrypted, can be done using any of the existing communication protocols, including SIP, XMPP, SMTP, or a custom protocol, etc.

Messaging service MS then sends (29) the classified content, encrypted or unencrypted, to the second communication application BD. If second user B is not currently logged in and authenticated into his computing device, preferable (s)he needs to be alerted that he has received a new content. According to configuration previously done, messaging service MS may abstain completely from sending notifications for classified content (second user B would discover them only if (s)he proactively authenticated to second communication application BD) or send (30) only a notification that new content is available, but avoid including any information from the classified content (sender, content, etc.) in the motivation, that may be viewable by other users, in proximity of second user computing device when he is not authenticated in the second communication application BD. The second communication application BD generally alerts (31) to the second user B, if a notification on new classified content, encrypted or unencrypted, is received.

For the particular embodiment that the classified content is sent encrypted (i.e. marked as classified and encrypted content), when second user B authenticates (32) to his/her device in the same way as described in step (21) above, his/her symmetric and public/private encryption keys are retrieved (33) from second user computing device key chain. The second communication application BD will use the second user B symmetric encryption keys to decrypt and display classified second user's B content sent by him/her, when him/her is authenticated. Second user's B private encryption keys, obtain from second user computing device key chain, can be used to view and decrypt (34) classified content received from other correspondents, encrypted by second user's correspondents with his/her public encryption key that (s)he has published to messaging service MS. The fact that second user B has performed authentication, can be used by messaging service MS to display (35) sent or received classified content.

When the second communication application BD detects (36) that second user B is not authenticated anymore, either because authentication failed, or because configurable time interval passed, it removes classified content (37) from the display, so they cannot be viewable on it any more, leaving only regular non-classified communications.

Also when a communication application AD or BD detects that its user (i.e. first user A or second user B) is not authenticated anymore, either because authentication failed, or because configurable time interval passed, it removes any other classified content (documents / images/etc.) from the display, so they cannot be viewable on it any more, leaving only regular non-classified content.

According to a preferred embodiment, and regarding the process of continuous authentication, proposed method uses a devices finger print sensor, such as the one available in iPhone® mobiles. Ideally, it registers to an event listener, which fires an event each time the user authenticates and when the authentication is broken.

However, and because not all computing devices have a finger print sensor or offer an API to access it, the proposed method may also use other authentication methods. For instance, it may use a camera, either external or built-in to the computing device 100A that records the face of the first user A during the interaction. The authentication module then continuously performs a face-recognition algorithm or an iris-recognition algorithm on the video stream. Once the recognition fails for a given number of subsequent attempts, the authentication will be revoked.

Another example includes the use of a touch-screen based authentication. In this case, the first user A may perform a touch gesture with one or several fingers on a touch sensitive surface of the first user computing device 100A. The gesture may include moving and still elements. Preferably, the authentication process ends on a still gesture, so that the first user A does not have to keep the fingers moving while accessing the content.

In another example, the first computing device 100A features an external hardware key, such as a dongle or a token. This key has to be inserted into a suitable port or brought into scanning range of a near-field sensor to keep the authentication alive.

Moreover, in yet another example, continuous auditory signals are used for authentication. For example, the first user A may have to be speaking or humming for keep the authentication active.

According to the preferred embodiment, the classified content is hidden as soon as the continuous authentication breaks. However, in some cases this may create usability issues to users: first, the authentication sensors may not be perfect and the authentication may break for very short amounts of time. Second, some authentication methods, such as humming or keeping the fingers in a certain position, may be hard to keep up for prolonged time. This can lead to situations, where users are thrown back to the main view of the communication application and then have to re-enter the view containing the classified content, which may be very frustrating and ultimately render the proposed method unusable. Hence, one parameter in the different embodiments is the time that the authentication is allowed to be broken without revoking access to the classified content. In the preferred embodiment, the authentication can be broken for the fraction of a second, which may offer a good balance to unwanted loss of authentication on the one hand, while maintaining the ability to quickly revoke authentication and hide classified content when desired.

Other embodiments, however, may offer longer grace period, during which the authentication is allowed to be broken. This may be particularly helpful if the authentication is less reliable.

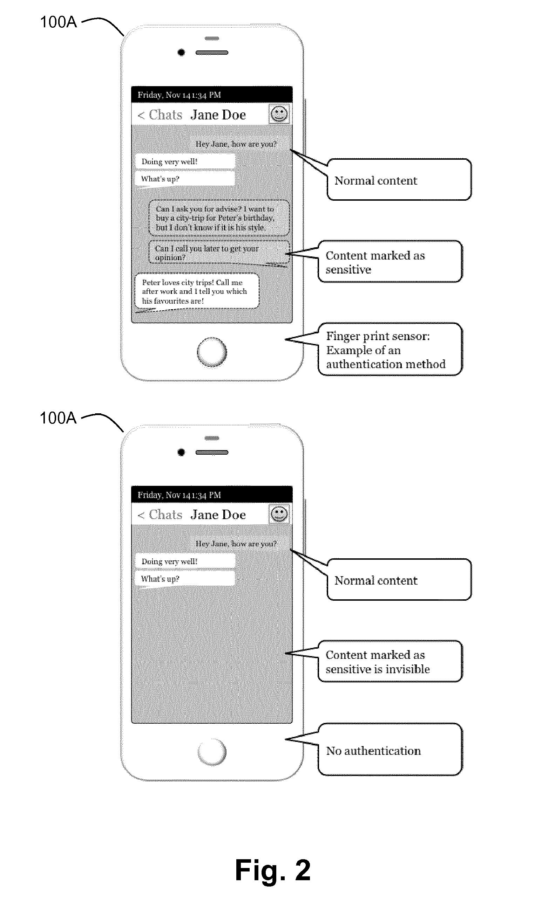

According to the preferred embodiment, the proposed method is used in the context of messaging in order to protect classified messages or classified chat histories (as shown in Fig. 2).

Nonetheless, according to another embodiment, the method protects a classified contact. Hence, as long as the first user A is not authenticated, the contact does not show up in the list of contacts, all the content exchanged with this contact is hidden, and no notifications or notification without any classified content will be shown when the contact interacts with the first user A.

In addition, in the preferred embodiment, classified content is persistent and can be accessed for an unlimited number of times until it is deleted. However, first user A may also limit the access for classified content, e.g., specifying a maximum number of accesses or an expiration date. For example, messages can be marked a one-access only, which turns them into ephemeral messages. This allows to seamlessly combining the access of ephemeral and persistent content management.

While the foregoing is directed to embodiments of the present invention, other and further embodiments of the invention may be devised without departing from the basic scope thereof. For example, other aspects may be implemented in hardware or software or in a combination of hardware and software.

Additionally, the software programs included as part of the invention may be embodied in a computer program product that includes a computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals.

The scope of the present invention is determined by the claims that follow.

## Claims

1. A computer-implemented method for protecting classified content on a computing device, the method comprising:
- providing, by a first user (A) to a first communication application (AD) installed on said computing device (100A), content comprising at least one of a message, a document, a picture, a video, an audio file, a user contact, an application, and/or an email, to be marked as classified content by said first communication application (AD);
- providing, by the first user (A) to the first communication application (AD), information which authenticates him/her in the first communication application (AD);
- verifying, by the first communication application (AD), that said information provided by the first user (A) is authentic, and upon a correct authentication of the first user (A) the first communication application (AD) marking the provided content as classified content; and
- continuously validating, by the first communication application (AD), every a first configured certain period of time, that the first user (A) continues to provide said information that authenticates him/her in the communication application (AD) and that said information provided by the first user (A) is authentic,
wherein, the first communication application (AD), upon the first user (A) failing to provide the correct information, prevents revealing the classified content on the first user computing device (100A), and upon the first user (A) providing the correct information, allows displaying the classified content on the first user computing device (100A).

2. The method of claim 1, wherein when the content provided by the first user (A) is a user contact, the first communication application (AD) in addition to the marking of the content as classified content further marks communication logs performed between the first user (A) and said user contact, said communication logs including a message, an email, a call, a video call and/or content exchanged including a document, a picture, a video and/or an audio file.

3. The method of previous claims, further comprising sending, by the first user (A) via the first communication application (AD), through a message service (MS), the classified content to at least a second user (B) using a computing device with a second communication application (BD) installed therein, wherein said sent classified content being automatically marked as classified content, by the second communication application (BD), in the computing device of the second user (B).

4. The method of claim 3, wherein the classified content is sent encrypted, the encryption being performed by the first communication application (AD) by retrieving from a public key repository a public encryption key corresponding to a pair of public/private encryption keys identifying the second user (B).

5. The method of claim 1, wherein the first communication application (AD) upon having marked the provided content as classified content further encrypts the classified content by retrieving an encryption key identifying the first user (A) from a key chain of the first user computing device (100A), the first communication application (AD) for performing said continuously validation comprising retrieving said encryption key identifying the first user (A) from said key chain of the first user computing device (100A) and decrypting the classified content using the retrieved encryption key.

6. The method of claim 1, wherein the first communication application (AD) upon having marked the provided content as classified content further encrypts the classified content, the encryption being performed by the first communication application (AD) by retrieving from a public key repository a public encryption key corresponding to a pair of public/private encryption keys identifying a second user (B), the method further comprising:
- sending, by the first user (A) via the first communication application (AD), through a message service (MS), the marked as classified and encrypted content to the second user (B) using a computing device with a second communication application (BD) installed therein;
- providing, by the second user (B) to the second communication application (BD), after having received the marked as classified and encrypted content, information which authenticates him/her in the second communication application (BD);
- validating, by said second communication application (BD), that the information provided by the second user (B) is authentic, and upon a correct authentication of the second user (B), the second communication application (BD) retrieving the private encryption key of said pair of public/private encryption keys identifying the second user (B) from a key chain of the second user computing device;
- decrypting, by the second communication application (BD), the marked as classified and encrypted content using the retrieved private encryption key; and
- displaying, on a display of the second user computing device, the classified content,
wherein said displaying being performed only if the second user (B) being still authenticated in the second communication application (BD), the latter continuously performing, every a second configured certain period of time, said validation step.

7. The method of claim 3, 5 or 6, wherein the sending of the classified content or marked as classified and encrypted content to the second user (B) includes the sending, by the message service (MS), of a notification alerting about the arrival of the classified content or marked as classified and encrypted content to the second communication application (BD), said notification being sent only if the second user (B) being still authenticated in the second communication application (BD).

8. The method of claim 3, 5 or 6, wherein the sending of the classified content or marked as classified and encrypted content to the second user (B) includes the sending, by the message service (MS), of a notification alerting about the arrival of the classified content or marked as classified and encrypted content to the second communication application (BD), said notification, if the second user (B) not being authenticated in the second communication application (BD), only notifying the second communication application (BD) of said arrival without revealing the classified content or marked as classified and encrypted content.

9. The method of any of previous claims, wherein the information provided by at least the first user (A) comprises biometric information of the first user (A) including at least one of a fingerprint, an eye scan, a hand or palm geometry, a facial recognition and/or a voice recognition.

10. The method of claim 9, wherein said first configured certain period of time comprises a period of time between 1 to 5 seconds.

11. The method of any of previous claims 1 to 8, wherein the information provided by at least the first user (A) comprises a password, a personal identification number, a security token, or the swipe of a figure.

12. The method of claim 1 or 5, comprising permanently storing on the first communication application (AD) the classified content or marked as classified and encrypted content.

13. The method of claim 1 or 5, comprising automatically removing the classified content or marked as classified and encrypted content once having been displayed a configured number of times on the first user computing device (100A).

14. The method of claim 1 or 5, wherein the first communication application (AD) comprises preventing revealing the classified content or marked as classified and encrypted content on the first user computing device (100A) during a specified period of time.

15. A computer program product comprising program code instructions which when loaded into a computer system controls the computer system to perform each of the methods according to any one of claims 1 to 14.
